# EUROPEAN PATENT APPLICATION

(11) **EP 2 008 758 A1**
(43) Date of publication of application: **31.12.2008**
(21) Application number: 08252199.8
(22) Date of filing: 26.06.2008
(51) Int. Cl.: B23P 6/00, F01D 5/00

(54) **Repaired gas turbine engine components and related methods**

(30) Priority: 29.06.2007 US 771032
(71) Applicant: United Technologies Corporation, Hartford, CT 06101 (US)
(72) Inventor: Reynolds, George H., Sanford, ME 07073 (US); Addis, Mark E., Kennebunk, ME 04043 (US)
(74) Representative: Leckey, David Herbert

(57) **Abstract**

Methods for repairing gas turbines are provided. A representative method includes: identifying an affected area (106) of a surface of a component (100) of the gas turbine, the surface of the component defining a portion of a gas flow path through the gas turbine; applying an epoxy-based filler (120) to the affected area; curing the epoxy-based filler (120); and blending the epoxy-based filler (120) with the surface of the component (100).

## Description

### BACKGROUND

### Technical Field

The disclosure generally relates to gas turbine engine repair.

### Description of the Related Art

During the life cycle of a gas turbine engine, various maintenance procedures are performed. Some of these maintenance procedures involve periodic inspections of components. Some of these inspections can be quite involved, including disassembly of various portions of the gas turbine that oftentimes requires removal of the gas turbine from an aircraft.

As is known, various components of a gas turbine can degrade over time. By way of example, flowpath components that are used to direct the flow of gas through the gas turbine can become abraded. This can be caused by dirt or other particles travelling with the flow of gas. Additionally, flowpath components can corrode, particularly when exposed to wet, salt-rich environments, such as can be experienced during over-ocean flights.

Conventionally, dimensional restoration of damaged metal components is accomplished in several manners. For instance, components can be restored by application of plasma spray, weld repair or plating.

### SUMMARY

Repaired gas turbine engine components and related methods are provided in accordance with the invention. In this regard, an exemplary embodiment of such a method comprises: identifying an affected area of a surface of a component of the gas turbine, the surface of the component defining a portion of a gas flow path through the gas turbine; applying an epoxy-based filler to the affected area; curing the epoxy-based filler; and blending the epoxy-based filler with the surface of the component.

Another exemplary embodiment of such a method comprises: removing a variable vane from an associated mount of the gas turbine; identifying an affected area of a surface of the mount; and repairing the affected area by applying an epoxy-based filler to the mount.

Still another exemplary embodiment of such a method comprises: removing a variable vane from a shroud of a compressor of the gas turbine, the shroud being formed of a Greek Ascoloy™ steel; visually identifying an affected area of a surface of the shroud, the surface defining a portion of a gas flow path through the gas turbine; applying an epoxy-based filler to the affected area such that the affected area is filled at least flush with the surface; curing the epoxy-based filler: and blending the epoxy-based filler with the surface of the shroud to dimensionally restore the surface.

An embodiment of a repaired gas turbine engine component comprises a surface defining a portion of a gas flow path through the gas turbine engine, the surface comprising an affected area thereon damaged by corrosion or abrasion, wherein the affected area has been repaired with a high temperature epoxy-based filler.

Other systems, methods, features and/or advantages of this disclosure will be or may become apparent to one with skill in the art upon examination of the following drawings and detailed description. It is intended that all such additional systems, methods, features and/or advantages be included within this description and be within the scope of the present disclosure.

### BRIEF DESCRIPTION OF THE DRAWINGS

Many aspects of the disclosure can be better understood with reference to the following drawings. The components in the drawings are not necessarily to scale. Moreover, in the drawings, like reference numerals designate corresponding parts throughout the several views.
FIG. 1 is a schematic diagram depicting an embodiment of a shroud of a high pressure compressor.
FIG. 2 is a partially cut-away, schematic diagram depicting a portion of the shroud of FIG. 1 (identified by the section line 2-2), showing detail of a vane trunnion hole and corresponding variable vane.
FIG. 3 is a partially cut-away, schematic view of a representative affected area.
FIG. 4 is a partially cut-away, schematic view of a representative affected area with an epoxy-based filler being applied.
FIG. 5 is a partially cut-away, schematic view of a representative affected area with epoxy-based filler being prepared for filling the affected area.
FIG. 6 is a partially cut-away, schematic view of a representative affected area showing an applicator being used to fill the affected area with epoxy-based filler.
FIG. 7 is a partially cut-away, schematic view of a representative affected area filled with epoxy-based filler that is being blended.

### DETAILED DESCRIPTION

As will be described in greater detail here, methods for repairing gas turbines are provided. Specifically, the embodiments described herein involve the use of epoxy-based fillers, e.g., putty, paste and/or paint, for dimensional restoring components. By way of example, the components can include flowpath components, the surfaces of which can be used to define gas flow paths through the gas turbines.

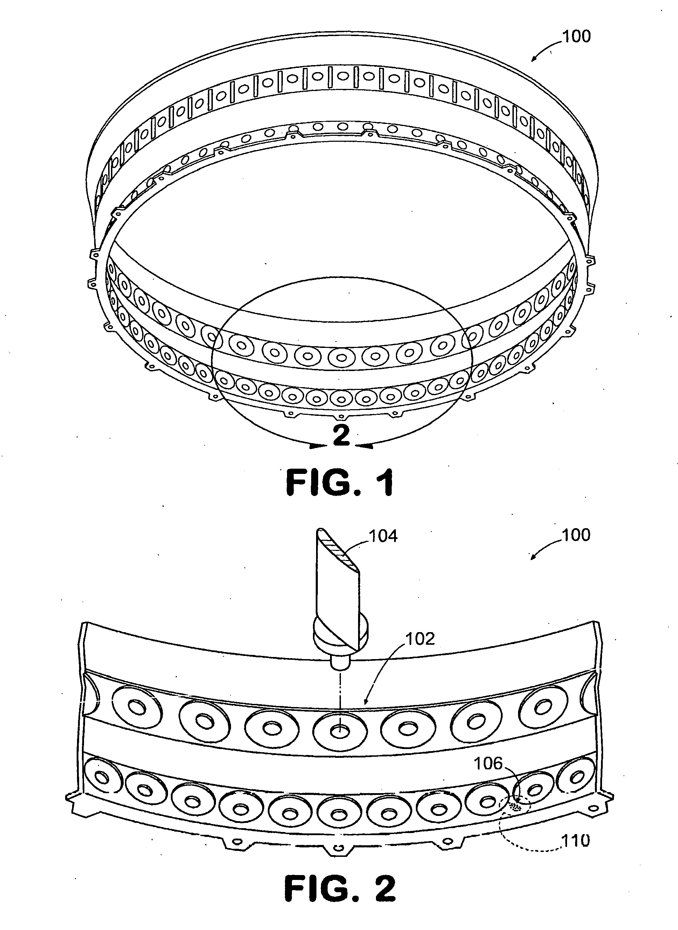

FIG. 1 depicts an exemplary embodiment of a component that may be repaired by an embodiment of a method for repairing gas turbines. In particular, FIG. 1 schematically depicts an embodiment of a high-pressure compressor shroud 100 that is used to mount variable vanes (not shown). In this particular example, the shroud is formed of Greek Ascoloy™ steel, a form of high-temperature steel, which is susceptible to corrosion and/or abrasion.

As shown in FIG. 2, the shroud incorporates multiple trunnion holes, e.g., hole 102, that are used to mount variable vanes, e.g., vane 104. In FIG. 2, the mounting location of vane 104 is shown by the dashed lines; however, the vane is removed from the trunnion hole. Removal of a vane may occur for various reasons such as repair and/or replacement of the vane, or servicing of the shroud such as may occur during engine overhaul, for example. Notably, an affected area 106 of a surface of the shroud 100 is depicted in the highlighted portion 110. In this case, such an affected area can be identified by visual inspection techniques and could have been caused by various mechanisms such as corrosion and/or abrasion.

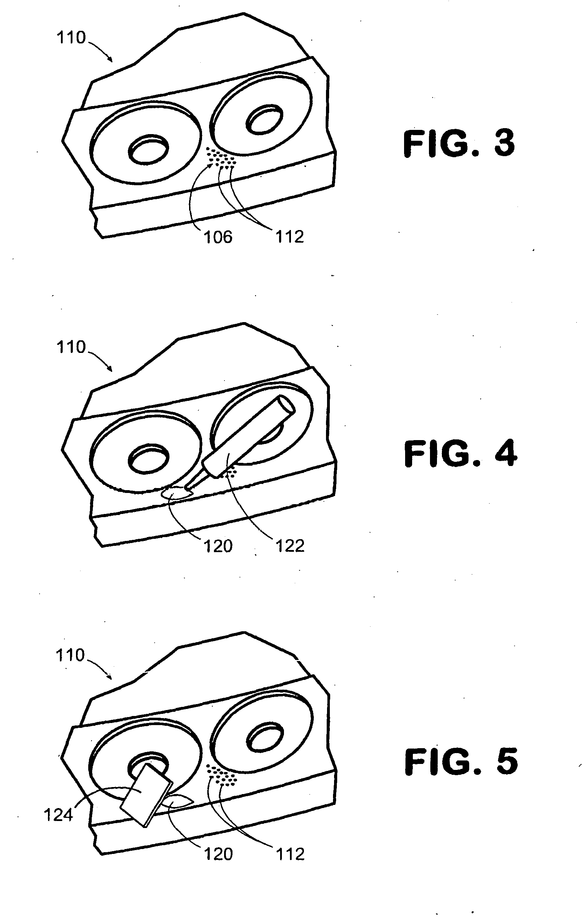

Portion 110 of the shroud is shown in greater detail in FIG. 3. As shown in FIG. 3, the affected area 106 includes multiple pits 112. In this example, the pits are caused by corrosion. Notably, however, an affected area of a surface can be caused by other mechanisms, such as by being abraded by particles carried along the gas flow path.

Despite the ability to plasma spray or weld repair pitted surfaces, there may be many instances in which a less costly and time-consuming method may be appropriate. This is particularly so in cases where structural integrity is not an issue. That is, dimensional restoration is desired without the necessity of restoring the structural strength of the component surface. In these cases, epoxy-based fillers may be used to restore the affected surface to provide an improved flow path surface finish. Notably, if left unprotected, pitting can increase in size and depth with subsequent part use.

In this regard, epoxy-based fillers, such as high-temperature epoxy paste, high-temperature epoxy putty, and high-temperature epoxy paint can be used. Examples of such epoxy-based fillers are produced by Cotronics Corporation, such as those distributed under the trade names THERMEEZ^{®}, DURABOND^{®} and DURALCO^{®}. The following figures schematically depict an embodiment of a method for repairing a gas turbine. Specifically, FIG. 4 schematically depicts an epoxy-based filler 120 being applied in an area adjacent to affected area 106 of shroud 100. In this case, the epoxy-based filler 120 is in the form of a paste.

As shown in FIG. 4, the epoxy-based filler is applied to the component using a dispenser 122. Clearly, the method of application could involve a spray applicator, for example, if the filler were in paint form, or a putty knife, for example, if the material were in putty form.

As depicted in FIG. 5, the epoxy-based filler can be worked until exhibiting a desired consistency. This can be accomplished in various manners. However, in FIG. 5, a suitably rigid spreader 124 is used.

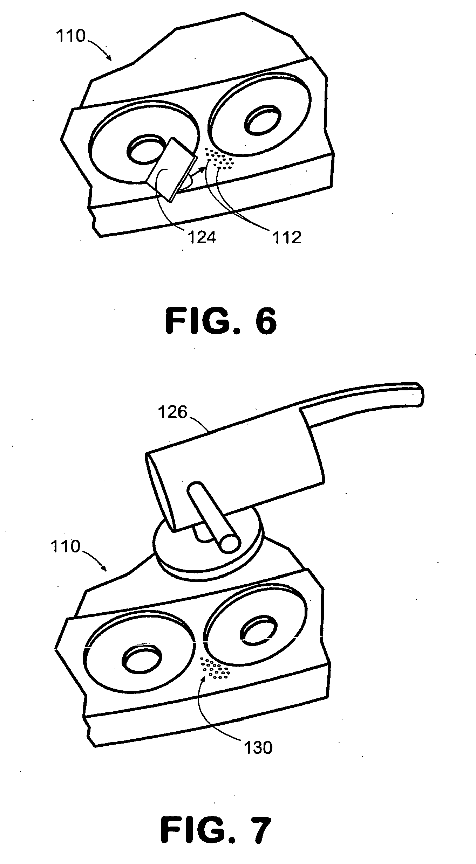

In FIG. 6, the epoxy-based filler is spread to fill the pits 112. Notably, the epoxy-based filler is worked into the pits by forcing the filler into the pits using the spreader. It should also be noted that, in addition to filling the pits to the surface of the component, the filler should be positioned to protrude from the pits. This should facilitate formation of a smooth surface after a blending procedure.

After filling, the epoxy-based filler is allowed to cure. Blending of the epoxy-based filler with the surface of the component is then undertaken. Although depicted as being accomplished with a power sander 126 in the embodiment of FIG. 7, various other techniques, such as hand sanding, for example, can be used. However, care should be taken during blending to ensure that the surface of the component is not adversely abraded.

As shown in FIG. 7, affected area 106 exhibits a blended, e.g., relatively smooth, surface finish 130. This configuration should resist further degradation of the affected area by reducing the surface area attributable to the pits. Airflow about the affected area also should be improved.

It should be emphasized that the above-described embodiments are merely possible examples of implementations set forth for a clear understanding of the principles of this disclosure. Many variations and modifications may be made to the above-described embodiments without departing substantially from the principles of the disclosure. All such modifications and variations are intended to be included herein within the scope of this disclosure and protected by the accompanying claims.

## Claims

1. A method for repairing a gas turbine comprising:
identifying an affected area (106) of a surface of a component (100) of the gas turbine, the surface of the component (100) defining a portion of a gas flow path through the gas turbine;
applying an epoxy-based filler (120) to the affected area (106);
curing the epoxy-based filler (120); and
blending the epoxy-based filler (120) with the surface of the component (100).

2. The method of claim 1, wherein:
the component (100) is a mount for a variable vane (104); and
the method further comprises:
removing the variable vane (104) from the mount (100) prior to performing the applying, the curing and the blending.

3. The method of claim 2, wherein the component (100) is a shroud of a high pressure compressor.

4. The method of any preceding claim, wherein the surface of the component (100) is formed of steel.

5. The method of claim 4, wherein the steel is a Greek Ascoloy™ steel.

6. The method of any preceding claim, wherein the affected area (106) comprises at least one of: a corroded area and an abraded area.

7. The method of any preceding claim, wherein the epoxy-based filler (120) comprises at least one of: a high-temperature epoxy putty, a high-temperature epoxy paste, and a high-temperature epoxy paint.

8. A repaired gas turbine engine component (100) comprising:
a surface defining a portion of a gas flow path through the gas turbine engine, the surface comprising an affected area (106) thereon damaged by corrosion or abrasion, wherein the affected area has been repaired with a high temperature epoxy-based filler (120).

9. The repaired gas turbine engine component of claim 8, wherein the high temperature epoxy-based filler (120) comprises at least one of: a paste, a paint and a putty.

10. The repaired gas turbine engine component of claim 9, wherein the high temperature epoxy-based filler (120) has been cured and blended to desired dimensions.

11. The repaired gas turbine engine component of claim 10, wherein the component (100) comprises a compressor shroud.
